(19) Europäisches Patentamt
European Patent Office
Office européen des brevets

(11) EP 2 287 960 B1

(12) EUROPEAN PATENT SPECIFICATION

(45) Date of publication and mention
of the grant of the patent:
**10.12.2014 Bulletin 2014/50**

(51) Int Cl.:
**H01G 9/20** (2006.01)

(21) Application number: **09754408.4**

(22) Date of filing: **22.05.2009**

(86) International application number:
**PCT/JP2009/002261**

(87) International publication number:
**WO 2009/144899 (03.12.2009 Gazette 2009/49)**

(54) **PHOTOELECTRIC CONVERSION ELEMENT**

PHOTOELEKTRISCHES UMWANDLUNGSELEMENT

ÉLÉMENT DE CONVERSION PHOTOÉLECTRIQUE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **27.05.2008 JP 2008138064**

(43) Date of publication of application:
**23.02.2011 Bulletin 2011/08**

(73) Proprietor: **Fujikura, Ltd.**
**Tokyo 135-8512 (JP)**

(72) Inventors:
• **OKADA, Kenichi**
**Sakura-shi**
**Chiba 285-8550 (JP)**
• **KITAMURA, Takayuki**
**Sakura-shi**
**Chiba 285-8550 (JP)**
• **MATSUI, Hiroshi**
**Sakura-shi**
**Chiba 285-8550 (JP)**

(74) Representative: **Hoffmann Eitle**
**Patent- und Rechtsanwälte PartmbB**
**Arabellastraße 30**
**81925 München (DE)**

(56) References cited:
JP-A- 2003 077 426    JP-A- 2003 187 880
JP-A- 2005 251 650    JP-A- 2005 294 001
JP-A- 2005 294 002    JP-A- 2007 317 565

EP 2 287 960 B1

# EP 2 287 960 B1

**Description**

<u>TECHNICAL FIELD</u>

The present invention relates to a photoelectric conversion element, and more particularly, to a photoelectric conversion element having enhanced bending durability and impact resistance.

<u>BACKGROUND ART</u>

Solar cells has been expected to become a source of clean energy against the background of environmental and resource issues in recent years. Among solar cells, a dye-sensitized solar cell (hereafter, also "DSC") such as those proposed by groups like Switzerland's Graetzel et al., have attracted attention as inexpensive photoelectric conversion elements that afford high conversion efficiencies.

These dye-sensitized solar cells are generally manufactured using glass substrates having a thickness of 0.5 mm or greater, and hence have little flexibility. However, a flexible type dye-sensitized solar cell can be manufactured by using, as an electrode substrate, a plastic film (for instance, PET or PEN no thicker than 0.2 mm), thin glass (for instance, thinner than 0.5 mm), a metal foil or the like. Flexible type dye-sensitized solar cells are actively researched as value-adding DSC types for small-scale power generation, thanks to their advantages, which include resistance against strain, thin profile and light weight. In recent years, the conversion efficiency of flexible type dye-sensitized solar cells is catching up with a level comparable to that of non-flexible type dye-sensitized solar cells (for instance, Patent document 1).

Furthermore, Patent document 2 relates to a photoelectric conversion element including a case and a plurality of laminates, wherein the case is composed of a rear plate and a frame body formed in the periphery of the rear plate, which comprises a window frame part that is arranged opposing the rear plate and that pushes the laminate towards the direction of the rear plate, while the window frame part is formed in a region corresponding to the position of a current collection wiring part of the laminate.

In addition, Patent document 3 relates to a photoelectric conversion element with a laminated body comprising a working electrode with a conductor, a counter electrode and an electrolyte layer, and a housing for accommodating the laminated body, wherein the housing comprises a frame body and a cover fixing the laminated body to the frame body, and the frame body covers the region corresponding to the position where a conductor is formed in the working electrode.

<u>BACKGROUND ART DOCUMENT</u>

<u>PATENT DOCUMENT</u>

Patent document 1: Japanese Patent Applicat Publication No. H11-288745
Patent document 2: Japanese Patent Application Publication No. 2005 251650
Patent document 3: Japanese Patent Application Publication No. 2005 294001

<u>SUMMARY OF THE INVENTION</u>

<u>PROBLEM TO BE SOLVED BY THE INVENTION</u>

However, in such flexible type DSC breakage of cell or module may occur and electrolytic solution or the like may scatter, when the DSC is hit or when the DSC is excessively bent by the user. Even if the cell or the module does not break at or below the pliability limit of the cell or module, bending may give rise to delamination of a sealing resin or of a titanium oxide porous film electrode, and may cause the resistance of conductive films to increase, impairing thereby the functionality of the cell.

With the foregoing in view, it is an object of the present invention to provide a photoelectric conversion element whose resistance against bending and impacts can be enhanced.

MEANS FOR SOLVING THE <u>PROBLEMS</u>

The photoelectric conversion element of the present invention comprises a structure, a case into which the structure is built, and a deformable body disposed between the structure and the case; wherein the structure comprises a conductive first electrode provided with a porous oxide semiconductor layer on which a sensitizing dye is supported, a second electrode disposed opposing the first electrode, and an electrolyte arranged at least at a portion between the first electrode and the second electrode. Furthermore, the above photoelectric conversion element further has a first substrate, provided within the case and opposing the first electrode, and a second substrate provided within the case and opposing the second electrode; the first electrode has a first base material and the second electrode has a second base material, and a bending strength of at least one of the one substrate and the second substrate is smaller than a bending strength of at least one of the first base material and the second base material included in the structure.

With then the above photoelectric conversion element, when it is subjected to an external bending strain, the deformable body deforms, and hence the structure is less likely to deform, if the bending strain is weak. In case of a strong bending strain, the bending strain acting on the structure can be sufficiently reduced, as compared with the bending strain acting on the case, owing to the deformation of the deformable body. Point stress, such as a blow, is also relieved by the deformable body. This allays the concern of damage to the structure. Therefore, with the photoelectric conversion element of the present invention, it is possible to enhance endurance against bending strain and impacts. In addition, the first substrate or the second substrate breaks or is damaged before malfunction of the structure (power generation mechanism) inside the case occurs, even when the photoelectric conversion element is acted upon by a bending strain strong enough to result in breakage. Breakage of the structure can be prevented more readily as a result, and it becomes possible to visually check, in a simple manner, whether the photoelectric conversion element has been subjected to an excessive bending strain. Breakage of the structure can be prevented regardless of non-occurrence of breakage or damage in the case.

In the above photoelectric conversion element, preferably, the deformable body is a liquid. Liquids deform more readily than solids. Even when the photoelectric conversion element is subjected to a weak bending strain from outside, therefore, the bending strain is more readily absorbed in the deformable body, and hence structure is less likely to deform. Also, bending strain acting on the case can be made less likely to be transmitted to the structure even when a strong bending strain acts on the photoelectric conversion element.

In the above photoelectric conversion element, the deformable body may be a gel-like body. In this case, there is no problem of leakage in the deformable body, should the deformable body be subjected to a strong bending strain and hence the case break since the deformable body is a gel-like body.

In the above photoelectric conversion element, the deformable body may be a clay.

In case that the deformable body is a liquid, a gel-like body or a clay, the structure of the above photoelectric conversion element is preferably disposed in a state of having freedom within the deformable body. In this case, the structure can move within a region, in the case, in which the deformable body is disposed. As a result, even when the photoelectric conversion element is subjected to a strong bending strain, the structure can slip within the case and escape into a position that minimizes the bending strain. Thus, only minimum moment and stress are applied to the structure.

In case that the deformable body is a liquid, a gel-like body or a clay, the viscosity of the deformable body at 25°C ranges preferably from 0.02 Pa·s to 200 Pa·s.

Thereby, the structure can move with some freedom within the deformable body. In this case, the freedom of the structure in the case is greater than when the viscosity lies outside the above range, and thus the structure can slip more freely within the case when the photoelectric conversion element is bent. Stress concentration can be suppressed as a result. The deformable body can be held readily between the structure and the case if the viscosity lies within the above range. That is, the structure and the case can be kept spaced apart from each other. In other words, contact between the structure and the case can be sufficiently suppressed. The freedom of the structure in the case is increased as a result, and stress generated due to bending of the photoelectric conversion element can be prevented, yet more thoroughly, from concentrating in the structure. The likelihood of damage to the structure can be reduced yet more thoroughly as a result.

In the above photoelectric conversion element, preferably, the deformable body is disposed over an entire region between the case and the structure.

In this case, endurance against bending strain and impacts acting on any portion of the case is enhanced.

In the above photoelectric conversion element, preferably, wiring that electrically connects the structure and an exterior is disposed so as to bend within the case.

In this case, the wiring is disposed so as to bend inside the case. Therefore, even when the structure is subjected to stress, upon impacts to or bending of the photoelectric conversion element, that stress is absorbed by the bending portion of the wiring. As a result there are sufficiently prevented damage to the structure, disconnections in the wiring, or detachment from the structure of the wiring that is connected to the structure.

In the above photoelectric conversion element, preferably, a drying agent is disposed between the structure and an inner wall of the case.

In this case, even when moisture intrudes into the case, the moisture absorbs by the drying agent. Therefore, it is possible to further suppress moisture from intruding into the structure.

EFFECTS OF THE INVENTION

The photoelectric conversion element of the present invention allows enhancing resistance against bending and impacts.

BRIEF DESCRIPTION OF THE DRAWINGS

Fig. 1 is a longitudinal cross-sectional diagram illustrating schematically a photoelectric conversion element according to a first embodiment of the present invention;

Fig. 2 is an enlarged schematic diagram of a region A enclosed by a double-dotted line in Fig. 1;

Fig. 3 is a perspective-view diagram illustrating schematically a different example of the first electrode of Fig. 1;

Fig. 4 is a cross-sectional diagram illustrating schematically an example of the photoelectric conversion element of Fig. 1, in which wiring is provided in a structure;

Fig. 5 is a cross-sectional diagram illustrating schematically an example of the photoelectric conversion element of Fig. 1, in which a drying agent is provided in a case;

Fig. 6 is a cross-sectional diagram illustrating schematically a photoelectric conversion element according to a second embodiment of the present invention;

Fig. 7 is a cross-sectional diagram illustrating schematically a photoelectric conversion element of the present invention, in the form of a module; and

Fig. 8 is a cross-sectional diagram illustrating schematically a photoelectric conversion element according to another embodiment of the present invention.

MODE FOR CARRYING OUT THE INVENTION

The present invention is explained in detail below with reference to accompanying drawings. However, the present invention is not limited to the features illustrated in the drawings, and various modifications can be made without departing from the scope of the present invention.

First embodiment

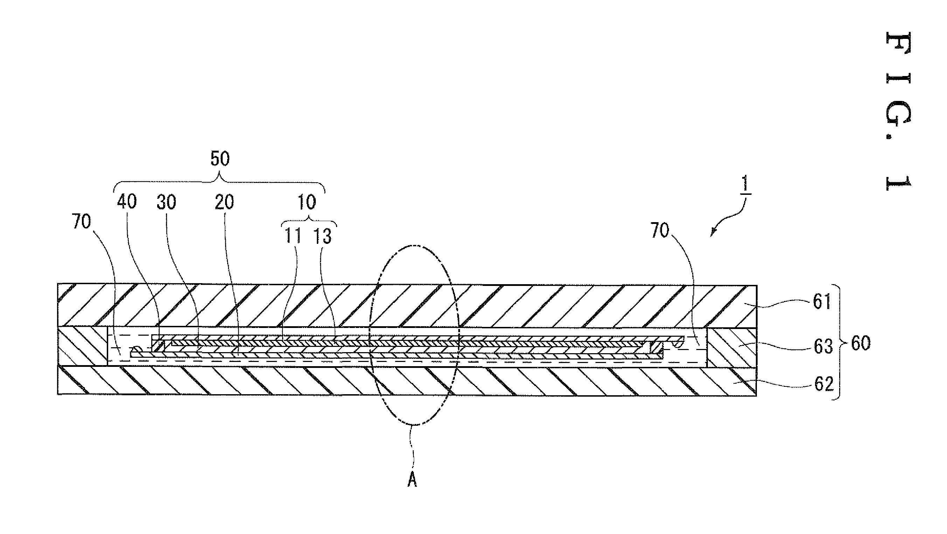

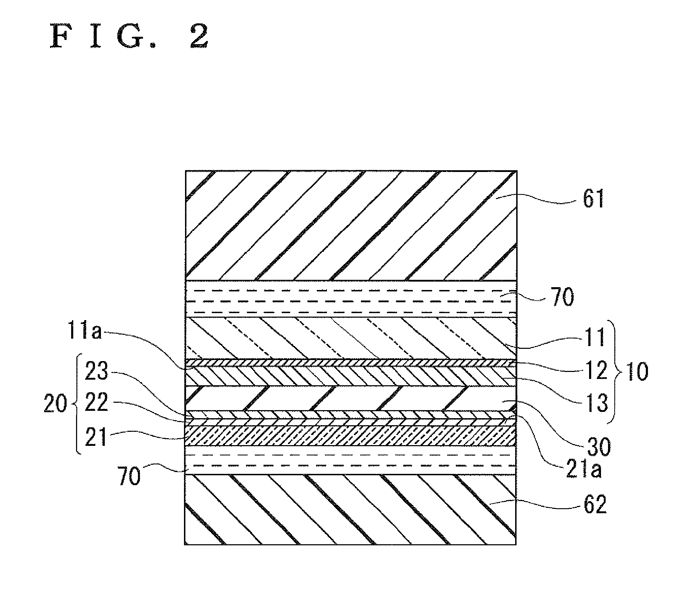

Fig. 1 is a longitudinal cross-sectional diagram illustrating schematically a first embodiment of the photoelectric conversion element of the present invention. Fig. 2 is an enlarged schematic diagram of a region A enclosed by a double-dotted line in Fig. 1.

A photoelectric conversion element 1 of the present embodiment comprises a structure 50; a case 60 into which the structure 50 is built, and a deformable body 70 disposed between the structure 50 and the case 60. The structure 50 comprises at least a conductive first electrode provided with a porous oxide semiconductor layer 13 on which a sensitizing dye is supported and a second electrode 20 disposed opposing the first electrode 10. The first electrode 10 and the second electrode 20 are bonded via a sealing member 40, such that an electrolyte 30 is sealed, between the first electrode 10 and the second electrode 20, by the sealing member 40. In the present embodiment an instance will be explained in which light incident from the first electrode 10 side is utilized mainly.

The above elements are explained in detail below.

The first electrode 10 is a conductive substrate provided with a porous oxide semiconductor layer 13, for instance a transparent electrode that comprises a first base material 11, a transparent conductive film 12 disposed on one face 11a of the first base material 11, and the porous oxide semiconductor layer 13 disposed on the one face 11a of the first base material 11, with the transparent conductive film 12 interposed therebetween.

A flexible substrate is used as the first base material 11. Examples of substrates having flexibility include, for instance, plastic sheets of polyethylene terephthalate, polyethylene naphthalate, polycarbonate or the like, as well as low-alkali glass or the like.

When using a plastic sheet as the first base material 11, the thickness of the sheet ranges for instance from 0.009 mm to 3 mm.

When using a low-alkali glass as the first base material 11, the content of alkali oxide such as $Li_2O$, $Na_2O$ or the like is preferably no greater than 5%. The thickness of the first base material 11 ranges for instance from 0.05 mm to 0.3 mm.

As the first base material 11 there is preferably used a material having as good a light transmittance as possible, more preferably a substrate whose transmittance not lower than 85%.

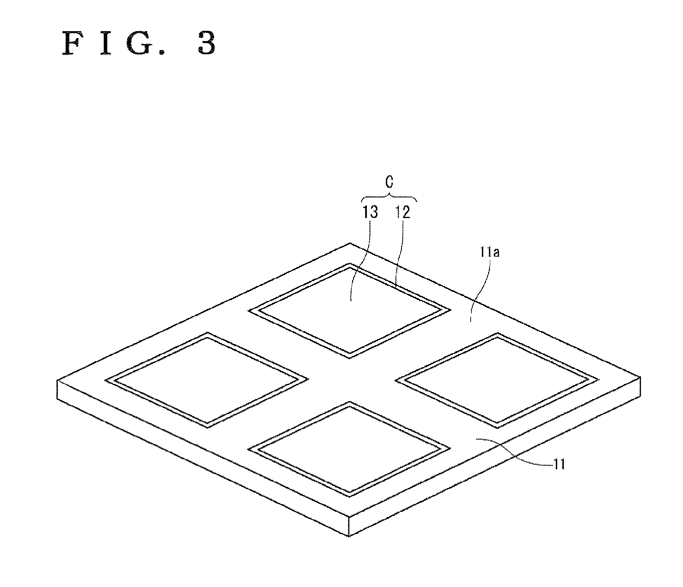

As illustrated in, for instance, Fig. 3, the first base material 11 may be in the form of a module wherein a plurality (in the figure, four) of cell units C is arranged two-dimensionally on the one face 11a, each unit cell C forming thereon a power-generation layer that comprises the transparent conductive film 12 and the porous oxide semiconductor layer 13. A photoelectric conversion element can be obtained thereby in which element output can be set arbitrarily, and in which greater surface area and lighter weight can be achieved simultaneously.

The porous oxide semiconductor layer 13 is not particularly limited, and there may be used any porous oxide semiconductor that is ordinarily employed for forming a porous oxide semiconductor in photoelectric conversion elements. Examples of such oxide semiconductors include, for instance, $TiO_2$, $SnO_2$, $WO_3$, ZnO, $Nb_2O_5$, $In_2O_3$, $ZrO_2$, $Y_2O_3$, $Al_2O_3$ or the like.

Examples of the sensitizing dye supported on the porous oxide semiconductor layer 13 include, for instance, ruthenium or iron complexes, porphyrins or phthalocyanine metal complexes, as well as organic dyes such as eosin, rhodamine, merocyanine, coumarin or the like. These can be appropriately selected in accordance with the intended application and the material of the porous oxide semiconductor layer 13.

The transparent conductive film 12 is a thin film which is disposed on one face 11a of the first base material 11, for imparting conductivity to the first electrode 10. Preferably, the transparent conductive film 12 is a thin film comprising a conductive metal oxide, in order to achieve a structure that does not significantly impair the transparency of the first electrode 10.

As the conductive metal oxide that forms the transparent conductive film 12 there is used, for instance, indium tin oxide (ITO), fluorine-doped tin oxide (FTO), tin oxide ($SnO_2$), zinc oxide (ZnO) or the like. The transparent conductive film 12 may be a single-layer film or multilayer film comprising the above conductive oxides.

Preferably, the transparent conductive film 12 is a single-layer film comprising FTO alone, or a multilayer film obtained by stacking a film comprising FTO onto a film comprising ITO. In this case, there can be configured a highly conductive first electrode 10 having excellent chemical resistance and heat resistance, and little light absorption in the visible region.

The second electrode 20 is disposed opposing the first electrode 10, and is an electrode comprising a second base material 21, a conductive film 22 disposed on one face of the second base material 21, and a catalyst 23 disposed via the conductive film 22.

A flexible substrate is used as the second base material 21. Examples of such substrates having flexibilty include, for instance, plastic sheets such as polyethylene terephthalate, polyethylene naphthalate, polycarbonate, as well as transparent substrates such as low-alkali glass, synthetic resin plates having flexibility, metal foils and the like.

As the conductive film 22 there is used, for instance, a metallic film or a conductive metal oxide film. The conductive film 22, however, is not limited thereto, and there can be used any conductive film ordinarily employed in the formation of conductive films of photoelectric conversion elements. The conductive film 22 may be omitted if the second base material 21 is conductive.

The catalyst layer 23 of the second electrode 20 is a thin film disposed on the second base material 21, via the conductive film 22, for imparting the second electrode 20 with catalytic activity for increasing the rate of charge exchange with the electrolyte 30. As the catalyst layer 23 there can be suitably used, for instance, a layer of carbon, platinum or the like. This layer can be obtained by forming platinum or the like on the surface of the conductive film 22, by vapor deposition or sputtering, or by coating of the surface of the conductive film 22 with chloroplatinic acid, and then performing a thermal treatment. The catalyst layer 23 is not particularly limited to the above-described carbon or platinum layers, so long as it can confer electrode functionality to the second electrode 20.

The electrolyte 30 is in the form of an electrolytic solution provided between the first electrode 10 and the second electrode 20 and in the form of an electrolytic solution that impregnates the porous oxide semiconductor layer 13. The electrolytic solution can be gelled (pseudo-solidified), using an appropriate gelling agent, to be integrally formed with the first electrode 10 and the second electrode 20. Alternatively, there can be used, for instance, a gel-like electrolyte that comprises oxide semiconductor particles and conductive particles.

As such an electrolytic solution there can be used, for instance, an organic solvent comprising redox species, an ionic liquid or the like.

The organic solvent is not particularly limited, and there may be used an organic solvent such as acetonitrile, methoxyacetonitrile, propionitrile, propylene carbonate, ethylene carbonate, diethyl carbonate, $\gamma$-butyrolactone or the like. As the ionic liquid there can be selected an ionic liquid comprising, for instance, cations having a quaternized nitrogen atom, such as imidazolium cations, pyrrolidinium cations, pyridinium cations or the like, and iodide ions, bis(trifluoromethanesulfonyl)imide anions, dicyanamide anions, thiocyanate anions or the like.

The redox species is not particularly limited. As the redox species there may be selected, for instance iodine/iodide ions, bromine/bromide ions or the like. The former redox species can be achieved, for instance, by adding iodine and an iodide salt (there can be used a lithium salt, a quaternized imidazolium salt derivative, a tetraalkylammonium salt or the like, singly or in combination), alone or combined with each other. To the electrolytic solution there may be further added, as the case may require, various additives, such as 4-tert-butylpyridine, N-methyl benzimidazole, a guanidinium salt derivative or the like.

The sealing member 40 seals the electrolyte 30 between the first electrode 10 and the second electrode 20, through opposing and bonding of the first electrode 10 and the second electrode 20. The sealing member 40 is not particularly limited so long as it has excellent bondability to the first base material 11 and the second base material 21. Preferred examples thereof include, for instance, a UV-curable resin or an adhesive comprising a thermoplastic resin having carboxyl groups in the molecular chain, specifically, Himilan (by Du Pont-Mitsui Polychemicals), Bynel (by Du Pont), Nucrel (by Du Pont-Mitsui Polychemicals), 31X101 (by ThreeBond) or the like.

The structure 50 is a dye-sensitized solar cell comprising the first electrode 10; the second electrode 20; the electrolyte 30 disposed between the first electrode 10 and the second electrode 20; and the sealing member 40 that joins the first electrode 10 and the second electrode 20 and that seals the electrolyte 30. The structure 50 may be a cell or a module. One end of the structure 50 may be joined to the case 60. This one end may be a side or a point. Preferably, the structure 50 is disposed, owing to the above joining, in a state of having freedom with respect to the case 60. In this case, the structure 50 is movable with respect to the case 60. The above joining can be realized, for instance, by way of wiring having a bending portion.

The case 60 encloses the structure 50 via the deformable body 70. The case 60 comprises, for instance, a substrate 61 disposed on the side of the first electrode 10, a substrate 62 disposed on the side of the second electrode 20, and a bonding layer 63 that bonds the substrates 61, 62. The substrate 61 disposed on the side of the first electrode 10 may have sufficient light transmissivity, preferably a transmittance not lower than 85%, in order not to prevent light from being incident onto the first electrode 10. Preferably, the substrate 61 is an impact-resistant resin, in order to protect the structure 50, which is built into the case 60, against external impacts. Examples of impact-resistant resins include, for instance, polycarbonate, polyethylene terephthalate and the like. The substrate 62 disposed on the side of the second electrode 20 need not have optical transmissivity. Therefore, the substrate 62 can be made up of another synthetic resin such as polyether ether ketone (PEEK), ABS resin or the like, in addition to the polycarbonate and polyethylene terephthalate exemplified as the substrate 61 that is disposed on the side of the first electrode 10.

It is preferred that the thickness of the substrate 61 disposed on the side of the first electrode 10 ranges from 2 mm to 4 mm, and the thickness of the substrate 62 disposed on the side of the second electrode 20 from 1 mm to 3 mm. The substrate 61, on the light incidence side, is likely to be subjected to external forces, caused by hail or the like, when the photoelectric conversion element is installed. Therefore, the substrate 61 can obtain durability against such external forces by being made somewhat thick.

Preferably, a barrier film (not shown) is provided on each surface of the substrates 61, 62, included in the case 60, that come into contact with the deformable body 70. Providing the barrier films allows further preventing intrusion of moisture in the case 60. The barrier film comprises, for instance, silica or polyvinyl alcohol, and can be formed by a sol-gel method or the like.

The deformable body 70 is disposed between the structure 50 and the case 60. In the present embodiment, the deformable body 70 comprises a liquid. Examples of the liquid include, for instance, a hydrophilic liquid such as water or alcohol, or a lipophilic liquid such as an oil, a lipophilic organic solvent or the like. Preferably, however, there is used a lipophilic liquid having low compatibility with water, since intrusion of moisture into the case 60, and thus intrusion of moisture into the structure 50, can be prevented thereby. An oil is preferred as such a lipophilic liquid, since oils have an appropriate viscosity and allow keeping the structure 50 in the deformable body 70 off the inner wall surfaces of the case 60. Examples of such oils include, for instance, silicone oil, mineral oil or the like. Among the foregoing, silicone oil is preferably used, since it has excellent chemical stability and stable viscosity over a wide temperature range. When using silicone oil, the silicon oil is preferably used after being sufficiently dried in a glovebox or the like. The amount of moisture contained in the deformable body 70 is preferably kept no greater than 1 wt%. Intrusion of moisture into the structure 50 can be sufficiently prevented thereby.

In the photoelectric conversion element 1, the structure 50 is enclosed in the case 60, and the deformable body 70 is disposed between the structure 50 and the case 60. Therefore, the deformable body 70 deforms when the photoelectric conversion element 1 is subjected to bending strain from outside. As a result, the bending strain is absorbed by the deformable body 70, so that the structure 50 is less likely to deform, if the bending strain is weak. The deformable body 70 deforms even in case of a strong bending strain, whereby the bending strain acting on the structure 50 can be sufficiently reduced compared to the bending strain that acts on the case 60. Point stress, such as a blow, is also relieved by the case 60 and the deformable body 70. This allays the concern of damage to the structure 50. The photoelectric conversion element 1, therefore, can enhance endurance against bending strain and impacts.

In the present embodiment, in particular, the deformable body 70 comprises a liquid. Liquids deform more readily than solids. Even when the photoelectric conversion element 1 is subjected to a weak bending strain from outside, therefore, the bending strain is more readily absorbed in the deformable body 70, and the structure 50 is less likely to deform, as compared with a case in which the deformable body 70 is a solid. Also, bending strain acting on the case 60 can be made less likely to be transmitted to the structure 50 than in a case where the deformable body 70 is a solid, even when a strong bending strain acts on the photoelectric conversion element 1.

If the structure 50 is disposed in a state where it has freedom with respect to the case 60 the structure 50 can move with respect to the case 60 when bending strain acts on the structure 50, upon bending of the photoelectric conversion element 1. As a result, the stress acting on the structure 50 on account of bending, impacts and the like, can be sufficiently reduced, and breakage or damage to the structure 50 can be sufficiently suppressed as well. Even when the bending strain is strong, the structure 50 slips within the case 60 on account of the bending strain, so that there are generated only minimum moment and stress since the structure 50 is disposed, in the deformable body 70, with freedom within the case 60. Breakage or damage to the structure 50 can be sufficiently suppressed as a result.

In the present embodiment, the inner face of the case 60 can be covered by a transparent sheet (not shown). The transparent sheet allows preventing the contents from scattering should breakage occur in the structure 50 and the case 60. The transparent sheet may be, for instance, of ethylene vinyl alcohol, polyvinylidene chloride, polyvinyl alcohol or the like.

From the viewpoint of the intended use, the deformable body 70 has preferably as good optical transmissivity as possible and exhibits preferably a light transmittance of 70% to 95%, more preferably of 80% to 95%, in the visible region.

Preferably, the viscosity of the deformable body 70 at 25°C ranges from 0.02 Pa·s to 200 Pa·s. Thereby, the structure 50 can move with some freedom within the deformable body 70. In this case, the freedom of the structure 50 in the case 60 is greater than when the viscosity lies outside the above range, and thus the structure 50 can slip more freely within the case 60 when the photoelectric conversion element 1 is bent. Stress concentration can be suppressed as a result. Further, the deformable body 70 can be kept more readily between the structure 50 and the case 60 if the viscosity lies within the above range. That is, the structure 50 and the case 60 can be kept spaced apart from each other. In other words, contact between the structure 50 and the case 60 can be sufficiently suppressed. The freedom of the structure 50 in the case 60 is increased as a result, and stress generated due to bending of the photoelectric conversion element 1 can be prevented, yet more thoroughly, from concentrating in the structure 50. The likelihood of damage to the structure 50 can be reduced yet more thoroughly as a result.

Preferably, the deformable body 70 disposed between the structure 50 and the case 60 covers the entire outer surface of the structure 50. In other words, the structure 50 is preferably held within the deformable body 70 while kept off the inner wall surfaces of the case 60. In this case, even if moisture or the like intrudes into the case 60, the intrusion path of moisture or the like into the structure 50 is blocked herein by the deformable body 70. Therefore, intrusion of moisture or the like can be effectively suppressed. Doing so allows preventing denaturation of the dye, the catalyst or the like due to moisture. Also, the gas-blocking ability of the photoelectric conversion element 1 is enhanced, since the entire outer surface of the structure 50 is covered by the deformable body 70. Specifically, there is enhanced the blocking ability against gases arising from vaporization of the electrolytic solution in the structure 50. This allows suppressing, for instance, evaporation of the electrolytic solution in the structure 50, as well as a decrease in the effective power-generation area of the structure 50. It is possible to provide a highly reliable photoelectric conversion element 1 in which photoelectric conversion efficiency over long periods of time is stable.

In addition, the entire outer surface of the structure 50 is covered by the deformable body 70. As a result, this allows mitigating impacts from any direction from the outside, and reducing the direction dependence of endurance against impacts. The freedom of the structure 50 in the case 60 is also increased, which allows suppressing yet more effectively damage to the structure 50 upon bending of the photoelectric conversion element 1 or upon impacts against the photoelectric conversion element.

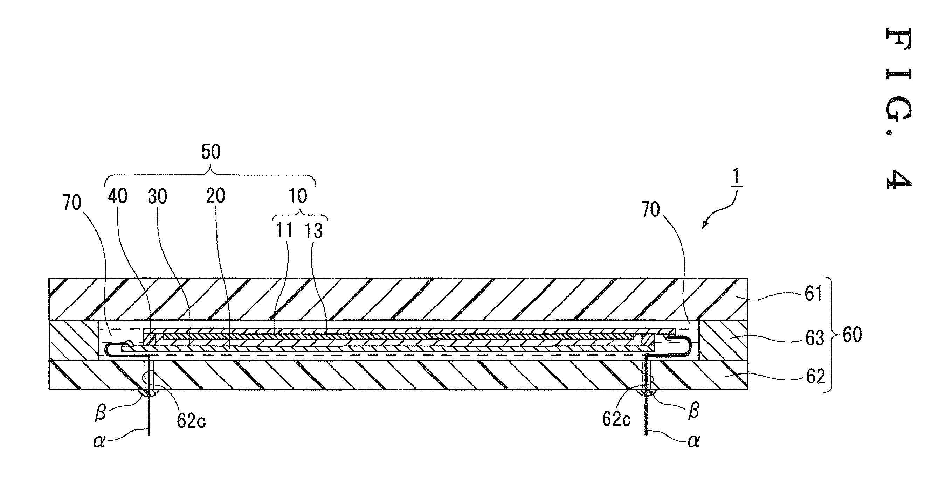

As illustrated in Fig. 4, the part of the wiring α disposed inside the case 60, from among the wiring α that electrically connects the structure 50 and the exterior, may or may not be bending. Preferably, however, there is provided a bending portion α1 so that part of the wiring α can bend. In this case, the wiring α is disposed so as to bend inside the case 60. Therefore, the structure 50 can move freely within the case 60 even when the structure 50 is subjected to stress, upon impacts to, or bending of, the photoelectric conversion element 1. That is, the stress acting on the structure 50 can be reduced. As a result there are sufficiently prevented damage to the structure 50, disconnections in the wiring α, as well as detachment of the wiring α, connected to the structure 50, from the first electrode 10 or the second electrode 20 of the structure 50, due to stress generated upon bending or impacts.

For instance, a flexible printed board can be used as the wiring α. Joining between the wiring α and the first electrode 10 or the second electrode 20 is preferably electric joining using a conductive adhesive, solder or the like. In Fig. 4, the wiring α connected to the first electrode 10 or the second electrode 20 is led out of the case 60 via through-holes 62c that are provided in the substrate 62 of the case 60. The wiring α is not particularly limited to being led out of the case 60 via the through-holes 62c provided in the substrate 62, and may be led out of the case via through-holes provided in the substrate 61 of the case 60. In the present embodiment, a liquid is used as the deformable body 70. Therefore, the through-holes 62c must be plugged with a resin β, for instance an UV-curable resin, after the wiring α is threaded through the through-holes 62c.

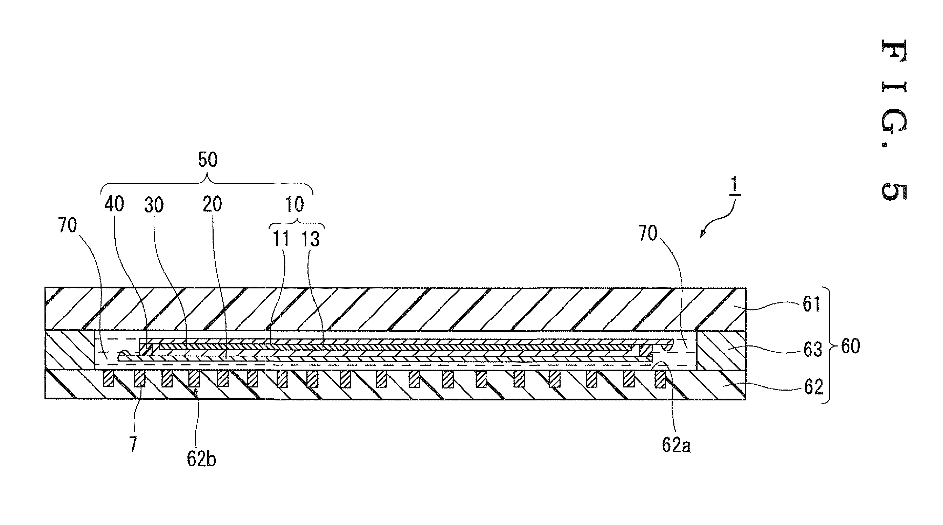

Preferably, a drying agent 7 is provided between the inner wall of the case 60 and the structure 50, as illustrated in Fig. 5. The drying agent 7 is disposed in such a way so as not to block light that is incident into the case 60. Preferably, in particular, the drying agent 7 is disposed at the face at which the case 60 comes into contact with the deformable body 70, or is disposed within the deformable body 70. Any moisture intruding into the case 60 is absorbed by the drying agent 7. This allows further suppressing intrusion of moisture into the structure 50. Examples of the drying agent 7 include, for instance, zeolites, and preferably, zeolite molecular sieves.

If a drying agent 7 is provided in the case 60, the drying agent 7 may be attached to a surface 62a at which the case 60 comes into contact with the deformable body 70, or may be disposed at a recess 62b which is provided in the surface 62a.

When the drying agent 7 is disposed without forming the recess 62b in the surface 62a, the drying agent 7 protrudes beyond the surface 62a. Accordingly, it is preferable to provide the drying agent 7 in a corner within the internal space of the case 60, not to impair damage to the structure 50, via the drying agent 7, when the photoelectric conversion element 1 is bent or takes an impact.

In case that the drying agent 7 is disposed by providing a recess 62b, the recess 62b is preferably a cylindrical recess 62b having a depth that is about half the thickness of the substrate 62, and having a diameter of about 1 mm, as illustrated in Fig. 5. Preferably, the recess 62b is provided as a plurality of thereof. The recess 62b not only accommodates the drying agent 7, but affords also the effects of making the case 60 likelier to break before the structure 50 does so, when the photoelectric conversion element 1 is bent, and of allowing damage to the photoelectric conversion element 1 to be visually checked.

A plurality of drying agents 7 may be enclosed in a bag or the like, and be disposed in that form within the deformable body 70. In this case, the bag that holds the drying agent 7 is preferably disposed in such a manner so as not to damage the structure 50 when light is incident into the first electrode 10 and the photoelectric conversion element 1 is bent or takes an impact. Specifically, the bag may be disposed between the sealing member 40 and the bonding layer 63, and between the second substrate 62 and the second electrode 20.

The moisture content contained in the deformable body 70 can be kept no greater than 1 wt% over long periods of time by providing the drying agent 7. Intrusion of moisture into the structure 50 can be suppressed yet more effectively as a result.

Preferably, at least one of the substrates 61, 62 that make up the case 60 has a weaker endurance against bending than at least one of the first base material 11 and the second base material 21 that make up the structure 50. Specifically, at least one of the substrates 61, 62 preferably breaks at a strain that is smaller than the bending limit of the structure 50. In other words, the bending strength of at least one of the substrate 61 and the substrate 62 of the case 60 is preferably smaller than the bending strength of at least one of the first base material 11 of the first electrode 10 and the second base material 21 of the second electrode 20.

In this case, the case 60 breaks or is damaged before malfunction of the structure 50 (power generation mechanism) inside the case 60 occurs, i.e. before functional impairment of structure 50 appears, even when the photoelectric conversion element 1 is acted upon by a bending strain strong enough to result in breakage or damage. Breakage of the structure 50 can be prevented more readily as a result, and it becomes possible to visually check, in a simple manner, whether the photoelectric conversion element 1 has been subjected to an excessive bending strain. Moreover, breakage of the structure 50 can be prevented regardless of non-occurrence of breakage in the case 60.

Specifically, a thick styrenic resin or the like is used as the substrates 61, 62 in a case where thin glass is used as the first base material 11 and the second base material 21 of the structure 50. Alternatively, the substrates 61, 62 may comprise the same resin as the first base material 11 and the second base material 21. In this case, the bending strength of the substrates 61, 62 can be made smaller than the bending strength of the first base material 11 and the second base material 21 by, for instance, forming recesses in the substrates 61, 62.

Second embodiment

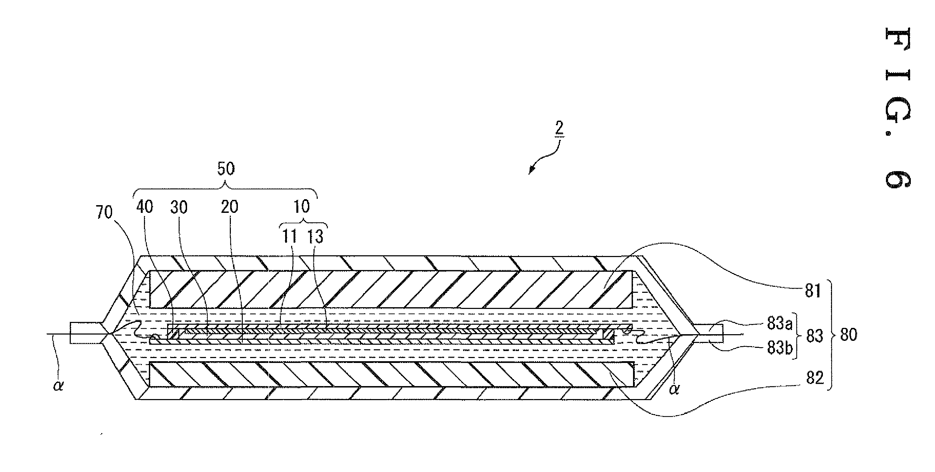

Fig. 6 is a cross-sectional diagram illustrating schematically a second embodiment of the photoelectric conversion element of the present invention.

A photoelectric conversion element 2 of the present embodiment comprises a structure 50; a case 80 into which the structure 50 is built, and a deformable body 70 disposed between the structure 50 and the case 80. The structure 50 comprises at least a conductive first electrode provided with a porous oxide semiconductor layer 13 on which a sensitizing dye is supported and a second electrode 20 disposed opposing the first electrode 10. The first electrode 10 and the second electrode 20 are bonded via a sealing member 40, such that an electrolyte 30 is sealed, between the first electrode 10 and the second electrode 20, by the sealing member 40. The present embodiment differs from the first embodiment in that herein a laminated bag 83 is used as part of the case 80.

The structure 50, the deformable body 70, the drying agent 7 and the wiring α are similar to those of the photoelectric conversion element 1 of the first embodiment.

The case 80 comprises a substrate 81 disposed on the side of the first electrode 10, a substrate 82 disposed on the side of the second electrode 20, and a laminated bag 83 that encloses the two substrates 81, 82. The substrate 81 disposed on the first electrode 10 and the substrate 82 disposed on the side of the second electrode 20 are respectively similar to the substrates 61, 62 that make up the case 60 of the first embodiment. The substrates 81, 82 are fixed to the inner side of the laminated bag 83.

Preferably, the laminated bag 83 has gas barrier properties and encapsulates hermetically the substrate 81 disposed on the side of the first electrode 10, the substrate 82 disposed on the side of the second electrode 20, the structure 50, and the deformable body 70. Such a laminated bag 83 can be obtained, for instance, through heat-sealing the edges of two sheets of film with each other. The film used herein may be, for instance, a film comprising moisture-resistant ethylene-vinyl alcohol, polyvinylidene chloride or polyvinyl alcohol. Alternatively, there can be used, for instance, an aluminum vapor-deposited film or silica vapor-deposited film in which aluminum or silica is vapor-deposited on the above films. Among the foregoing, for instance, the aluminum vapor-deposited film can be used only in the substrate on the side at which no light enetrs, i.e. in the substrate 82.

In the photoelectric conversion element 2, the structure 50 is enclosed in the case 80, and the deformable body 70 is disposed between the structure 50 and the case 80. Accordingly, the deformable body 70 deforms when the photoelectric conversion element 2 is subjected to bending strain from outside. As a result, the bending strain is absorbed by the deformable body 70, so that the structure 50 is less likely to deform, if the bending strain is weak. The deformable body 70 deforms in case of a strong bending strain, whereby the bending strain acting on the structure 50 can be sufficiently reduced compared to the bending strain that acts on the case 80. Point stress, such as a blow, is also relieved by the case 80 and the deformable body 70. This allays the concern of damage to the structure 50. The photoelectric conversion element 2, therefore, can enhance endurance against bending strain and impacts.

In the present embodiment, in particular, the deformable body 70 comprises a liquid. Liquids deform more readily than solids. Even when the photoelectric conversion element 2 is subjected to a weak bending strain from outside, therefore, the bending strain is more readily absorbed in the deformable body 70, and the structure 50 is less likely to deform as compared with a case in which the deformable body 70 is a solid. Also, bending strain acting on the case 60 can be made less likely to be transmitted to the structure 50 than in a case where the deformable body 70 is a solid, even when a strong bending strain acts on the photoelectric conversion element 2.

If the structure 50 is disposed in a state where it has freedom with respect to the case 80 the structure 50 can move with respect to the case 80 when bending strain acts on the structure 50, upon bending of the photoelectric conversion element 2. As a result, the stress acting on the structure 50 on account of bending, impacts and the like, can be sufficiently reduced, and breakage or damage to the structure 50 can be sufficiently suppressed. When the bending strain is strong, the structure 50 slips within the case 80 on account of the bending strain, so that there are generated only minimum moment and stress since the structure 50 is disposed, in the deformable body 70, having freedom within the case 80. Breakage or damage to the structure 50 can be sufficiently suppressed as a result.

As is the case in the first embodiment, it is preferable that the substrates 81, 82 that make up the case 80 have a weaker endurance against bending than the base materials 11, 21 that make up the structure 50, i.e., that the bending strength of the substrates 81, 82 of the case 80 is smaller than the bending strength of the first base material 11 of the first electrode 10 and the second base material 21 of the second electrode 20. In this case, the case 80 breaks or is damaged before malfunction of the structure 50 (power generation mechanism) inside the case 80 occurs, i.e. before functional impairment of structure 50 appears, even when the photoelectric conversion element 2 is acted upon by a bending strain strong enough to result in breakage or damage. Breakage of the structure 50 can be prevented more easily thereby. At least the portion of the laminated film 83 that is on the side of the substrate 81 has optical transmissivity, in order to allow light to be led to the first electrode 10 of the structure 50. As a result, even when the substrate 81 break due to excessive bending strain acting on the photoelectric conversion element 2, that breakage can be visually checked, in a simple manner, through the laminated film 83. Moreover, breakage of the structure 50 can be prevented regardless of non-occurrence of breakage in the case 80.

In the present embodiment, the structure 50 and the substrates 81, 82 are encapsulated by the laminated bag 83. Scattering of the contents can be prevented as a result, even in case of breakage or the like of the substrate 81 or the substrate 82.

The gas-blocking ability of the photoelectric conversion element 2 can be enhanced if the deformable body 70 is disposed between the case 80 and the structure 50 in such a way so as to cover the entire outer surface of the structure 50. This allows suppressing, for instance, evaporation of the electrolytic solution in the structure 50, as well as decreases in the effective power-generation area. Intrusion of moisture into the structure 50 can be suppressed by providing the deformable body 70. Doing so allows preventing denaturation of the dye, the catalyst or the like due to moisture. It is possible to provide a highly reliable photoelectric conversion element 2 in which photoelectric conversion efficiency over long periods of time is stable.

The wiring $\alpha$ and the drying agent 7 can also be provided in the second embodiment, as in the photoelectric conversion element 1 of the first embodiment.

In the above explanation of the photoelectric conversion elements of the first embodiment and the second embodiment (photoelectric conversion elements illustrated in Fig. 1 to Fig. 6), light is assumed to be utilized mainly when incident on the side of the first electrode 10, but light may also be utilized mainly when incident on the side of the second electrode 20.

In the latter case, the first base material 11 need not have optical transmissivity, and hence there can be used, for instance, a metal foil having a thickness of 0.009 to 0.2 mm, in addition to the above-described base materials. The transparent conductive film 12 is not required when using a metal foil as the first base material. If a metal foil is employed as the first electrode 10, there is preferably used a metal foil having durability against electrolytic solutions, such as Ni, W, Nb, Ti, Al or the like, in particular Ti, in redox $I^-/I_3^-$ systems.

The second base material 20 must have optical transmissivity. As the second base material 20 there is used, for instance, a transparent substrate (preferably a substrate whose transmittance not lower than 85%) such as a plastic sheet of polyethylene terephthalate, polyethylene naphthalate, polycarbonate or the like, or low-alkali glass.

The substrates 61, 81 of the cases 60, 80, on the side of the first electrode 10, need not have optical transmissivity, and hence there can be used other synthetic resins or the like, in addition to the polycarbonate, polyethylene terephthalate and so forth. The thickness of the substrates 61, 81 disposed on the side of the first electrode 10 ranges preferably from 1 mm to 3 mm, and the thickness of the substrates 62, 82 disposed on the side of the second electrode 20 ranges preferably from 2 mm to 4 mm. The light incidence side is likely to be subjected to external forces, caused by hail or the like, when the photoelectric conversion element is installed. Therefore, the substrates can obtain durability against such external forces by being made somewhat thick.

Manufacturing method: First embodiment

Next, a method for manufacturing the photoelectric conversion element 1 according to the first embodiment of the present invention will be described.

The structure 50 is formed first.

(Manufacture of the first electrode)

There is prepared a first electrode substrate comprising the first base material 11 and the transparent conductive film 12 disposed on the one face 11a of the first base material 11. If the structure 50 is a module, there is formed, for instance, a plurality of conductive films 12 of desired size on the first base material 11, or, alternatively, the transparent conductive film 12 is formed on the entire surface of the first base material 11a, and then slits are formed in the transparent conductive film 12.

An appropriate method for forming the transparent conductive film 12 on the first base material 11 can be selected in accordance with the material of the transparent conductive film 12. Examples of such a method include, for instance, sputtering, CVD (chemical vapor deposition), SPD (spray pyrolysis deposition), vapor deposition and the like. A thin film comprising an oxide semiconductor that comprises ITO, FTO, $SnO_2$ or the like is formed in accordance with the above methods. Optical transmissivity is impaired if the optical transparent conductive film 12 is too thick, while conductivity is impaired if the film is too thin. Therefore, the film thickness ranges preferably from 0.1 to 1 $\mu$m, in terms of achieving both optical transmissivity and conductivity properties.

An appropriate method for forming slits in the transparent conductive film 12 can be selected in accordance with the material of the transparent conductive film 12. Specific examples thereof include, for instance, processing by excimer laser, YAG laser, $CO_2$ laser, as well as processing by air jet, water jet, or by etching, machining or the like. As illustrated in Fig. 3, the transparent conductive film 12 is divided as a result into a plurality of regions (four regions in Fig. 3). The slit pitch can be appropriately set in accordance with the size of the cells in the photoelectric conversion element 1.

The porous oxide semiconductor layer 13 is formed next on the transparent conductive film 12. By this stage, no dye is supported yet on the porous oxide semiconductor layer 13. The porous oxide semiconductor layer 13 can be formed by patterning an oxide semiconductor paste, for instance of titanium oxide or the like, using a printing method such as screen printing or inkjet printing, followed by heating to a temperature required for microparticle sintering, to yield a porous film. In the case of a stack of a porous oxide semiconductor layer containing no light-scattering particles and a porous oxide semiconductor layer containing light-scattering particles, there may be printed, and then sintered, a paste having no light-scattering particles, to form a porous oxide semiconductor layer, after which there is printed thereon, and then sintered, a paste containing light-scattering particles, to form a porous semiconductor layer.

Next, the first base material 11 having the transparent conductive film 12 and the porous oxide semiconductor layer 13 formed thereon is immersed overnight in, for instance, dehydrated ethanol in which a dye has been dissolved, to cause the dye to be supported on the porous oxide semiconductor layer 13. The porous oxide semiconductor layer 13 is then washed to remove excess dye solution, and is dried, to remove the solvent. The first electrode 10 is manufactured thus.

(Manufacture of the second electrode)

There is prepared a second electrode substrate comprising the second base material 21 and the conductive film 22 disposed on the one face 21a of the second base material 21. The conductive film 22 may be omitted if the second base material 21 is conductive. A film of the catalyst 23 is formed on the conductive film 22 by sputtering or the like. If the structure 50 is a module, there is formed, for instance, a plurality of conductive films 22 of desired size on the second base material 21, or, alternatively, the conductive film 22 is formed on the entire surface of the second base material 21, and then slits are formed in the transparent conductive film 22. Alternatively, there is prepared a plurality of second base materials 21 of desired size. The method for forming the conductive film 22 and the slits is the same as the method for forming the transparent conductive film 12 on the first base material 11. The second electrode 20 is manufactured thus.

Thereafter, an electrolytic solution infusion hole (not shown) is formed in a corner of the second electrode 20.

(Structure assembly)

The first electrode 10 and second electrode 20 manufactured as described above are opposingly disposed, offset from each other to allow for electrode lead-out, and the peripheries of the electrodes are bonded by way of the sealing member 40, to yield a bag-like shape.

An offset of about 3 mm to 5 mm between the first electrode 10 and the second electrode 20 is sufficient when these are disposed opposing each other. The height of the sealing member 40 from the first base material 11a is preferably greater than the thickness of the porous oxide semiconductor layer 13. Specifically, the thickness of the sealing member 40 ranges from about 30 $\mu$m to 150 $\mu$m.

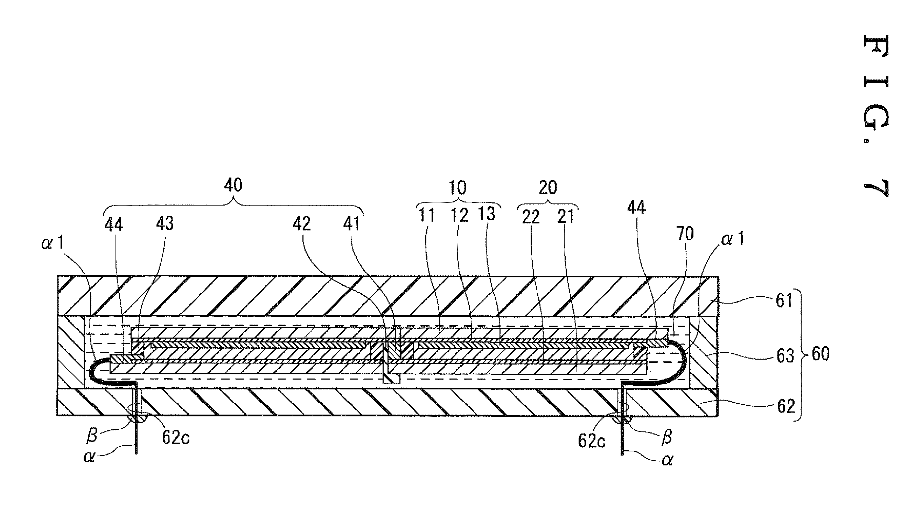

Fig. 7 is a cross-sectional diagram illustrating schematically a photoelectric conversion element in a case where the structure 50 is a module. As illustrated in Fig. 7, the sealing member 40 is manufactured by appropriately assembling a first sealing member 41 for joining adjacent cells to each other, a second sealing member 42 for insulating adjacent cells, a third sealing member 43 for preventing evaporation of the electrolytic solution, and fourth sealing members 44 for leading the electrodes out.

As the first sealing member 41 there can be used, for instance, a conductive paste or a conductive adhesive in which conductive particles are blended with a binder (resin, ceramic or the like). Adjacent cells can be electrically connected to each other by arranging the first sealing member 41 in such a manner that one end of the first electrode 10 is electrically connected to one end of the second electrode 20 of adjacent cells. When using the conductive paste as the first sealing member 41, the second electrode 20 can be fixed to the top face of the first sealing member 41 through sintering of the conductive paste in a state where the second electrode 20 is in contact with the first sealing member 41. Preferably, the second electrode 20 and the first sealing member 41 are pressed during sintering of the conductive paste, in order to increase the joining strength of the second electrode 20 and the first sealing member 41.

As the second sealing member 42 there can be used as an insulator such as, for instance, a hot-melt resin (hot-melt adhesive) such as an ionomer or the like, a UV-curable resin, or low-melting point glass or the like. Adjacent cells can be insulated from each other by forming the second sealing member 42 at the portions where the first electrode 10 and the second electrode 20 are connected. The second sealing member 42 can be formed, for instance, by applying a hot-melt adhesive or the like at gaps between cells.

As the third sealing member 43 there can be used, for instance, a UV-curable resin, as in the sealing member 40 of the above-described first embodiment. Specific examples thereof include, for instance, Himilan (by Du Pont-Mitsui Polychemicals), Bynel (by Du Pont), Nucrel (by Du Pont-Mitsui Polychemicals), 31X101 (by ThreeBond) or the like. Using a UV-curable resin is preferred since no heat is employed, and hence the dye is not damaged. The third sealing member 43 joins the first electrode 10 and the second electrode 20, and allows thus preventing evaporation of the electrolytic solution out of the structure.

As the fourth sealing members 44 there can be used, for instance, a conductive paste such as a carbon paste or the like. In this case, the conductive paste used may be a paste obtained by kneading conductive particles such as carbon particles or the like, with a binder, a solvent and other components. Specific examples of the carbon paste may be a paste in which there are blended an inorganic binder, isomer-mixture terpineol, graphite powder, and ethyl cellulose, in ratios 0.02 to 0.2:1:0.02 to 0.2:0.02 to 0.2, respectively; or a paste in which there are blended an inorganic binder, ethyl carbitol, graphite powder, ethyl cellulose and toluene, in ratios 0.02 to 0.2:1:0.02 to 0.2:0.02 to 0.2:0.01 to 0.1. The fourth sealing members 44 are formed to draw from on the transparent conductive film 12 or the conductive film 22 to the outside of the cells.

The interior of the porous oxide semiconductor layer 13 is filled next with electrolytic solution. Filling the electrolytic solution into the porous oxide semiconductor layer 13 can be performed by infusing the electrolytic solution through an electrolytic solution infusion hole (not shown) provided in the second electrode 20 and making the electrolytic solution impregnate the space between the first electrode 10 and the second electrode 20, and impregnate the porous oxide semiconductor layer 13. After infusion of the electrolytic solution, the electrolytic solution infusion hole is plugged in a liquid-tight fashion using, for instance, a UV-curable resin, to seal the space into which the electrolytic solution has been infused. The resin used for sealing the electrolytic solution infusion hole is preferably a UV-curable resin, since the UV-curable resin utilizes no heating, and hence the dye is not damaged.

The structure 50 is thus obtained.

Next, wiring $\alpha$ is electrically connected to the electrode leadout portions of the first electrode 10 and the second electrode 20. The wiring $\alpha$ is preferably electrically connected by way of a conductive adhesive, solder or the like.

A wired structure 50 can be manufactured as a result of the above process.

Case manufacture

The case 60 is manufactured next.

There are prepared the substrate 61 of the case, on the side of the first electrode 10, and the substrate 62, on the side of the second electrode 20.; In the substrate 62, on the side of the second electrode 20, there are formed two through-holes 62c, for leading the wiring $\alpha$ out of the case 60, and there is formed an infusion hole (not shown), for infusing the deformable body 70 into the case 60.

If needed, a barrier film is formed next on the faces of the two substrates 61, 62, of the case 60, that come into contact with the deformable body 70. If a drying agent 7 is disposed in the case 60, a recess 62b for inserting the drying agent 7 is formed, using an end mill or the like, in the substrate 62, on the side of the second electrode 20.

Thereafter, the drying agent 7, having been thoroughly dried in, for instance, a glovebox, is pressed into the recess 62b, and then the drying agent 7 is wetted by the deformable body 70 to prevent air from the drying agent 7 from entering into the deformable body 70.

Next, the structure 50 manufactured as described above is lightly clamped by the substrate 61 on the side of the first electrode 10 and the substrate 62 on the side of the second electrode 20, a bending portion $\alpha 1$ of the wiring $\alpha$ is formed inside the case 60, in such a manner that the wiring $\alpha$ is held inside the case 60 with room to spare, and the free ends of the wiring $\alpha$ are lead out of the case 60 via the through-holes 62c. Thereafter, a bonding layer 63 is formed and fixed, using a resin adhesive, around the substrates 61 and 62 that make up the case 60. A resin $\beta$ is formed, using a resin adhesive, to seal the through-holes 62c through which the wiring $\alpha$ is led out.

The deformable body 70, having been thoroughly dried in, for instance, a glovebox, is prepared next. A liquid is used as the deformable body 70. The deformable body 70 is inserted via a through-hole provided in the substrate 62 of the case 60, on the side of the second electrode 20, while under appropriate formation of vacuum to prevent air bubbles from entering into the deformable body 70. Thereafter, the infusion hole is sealed with, for instance, a UV curable resin.

The photoelectric conversion element 1 is obtained as described above.

Manufacturing method: second embodiment

A method for manufacturing the photoelectric conversion element 2 according to the second embodiment will be described.

The structure 50, the substrate 81 of the case 80 on the side of the first electrode 10, and the substrate 82 of the case 80 on the side of the second electrode 20 can be manufactured in the same way as the structure 50 and the substrates 61, 62 of the first embodiment.

After preparation of the structure 50 and the two substrates 81, 82 of the case 80, the deformable body 70 is disposed on one face of the first electrode 10 and one face of the second electrode 20 of the structure 50.

Meanwhile, two square-shaped films are prepared, and the substrates 81, 82 are disposed on a respective film, to form two stacks. The structure 50 is disposed between the two stacks, in such a way so as to be lightly clamped by the substrates 81, 82. One wiring $\alpha$ from two wirings $\alpha$ is clamped by the edges on one side of mutually opposing films. The edges of three sides of the films are heat-sealed to each other, to yield a bag-like body having one opening. The deformable body 70 is infused next into the bag-like body through the opening. The deformable body 70 is infused so as to enter between the structure 50 and the substrates 81, 82. After the bag-like body is filled with the deformable body 70, the remaining wiring $\alpha$ is clamped between the remaining edges of the films that form the opening, and the edges are sealed together using a vacuum sealer. The laminated bag 83 is thus obtained.

The photoelectric conversion element 2 according to the second embodiment is obtained as described above.

In the second embodiment, the structure 50 can be sealed using a vacuum sealer when the structure 50 is encapsulated in the case 80. Therefore, the photoelectric conversion element 2 can be manufactured in a simpler manner than in accordance with the manufacturing method of the photoelectric conversion element 1 of the first embodiment.

The present invention is not limited to the above first and second embodiments. For instance, in the explanation of the above first and second embodiments, the deformable body comprises a liquid. So long as it can deform, the deformable body is not limited to a liquid. Examples of deformation bodies other than liquids include, for instance, gel-like bodies, clay, elastic bodies or the like. In any case, though, the above bodies must have optical transmissivity, in order for light entering the case to be led into the structure. If the deformable body is a gel-like body, there is no problem of leakage in the deformable body, should the case be subjected to a strong bending strain and hence the case break. Therefore, there is no need for covering the inner wall face of the case with a transparent sheet, as described in the first embodiment.

Examples of transparent gel-like bodies include, for instance, silicone gel, gelled ionic liquids or the like, preferably silicone gel, since it is non-aqueous.

Examples of transparent clays include, for instance, smectites, polymer clays and the like, preferably smectites, on account of their low cost.

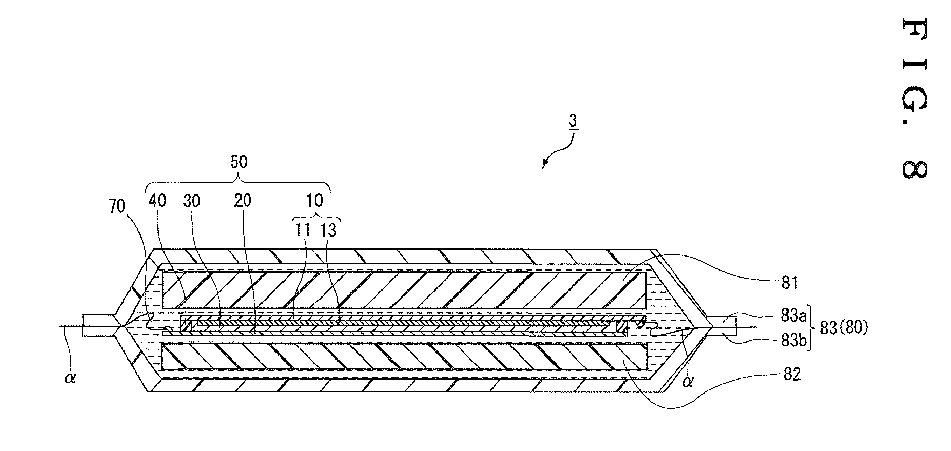

In the second embodiment, the substrates 81, 82 are fixed to the inner side of the laminated film 83, as illustrated in Fig. 6. As illustrated in Fig. 8, however, the substrates 81, 82 need not be fixed to the inner side of the laminated film 83. That is, the substrates 81, 82 may stand off the laminated film 83. In this case, the case 80 comprises the laminated film 83 alone. The substrates 81, 82 are disposed within the deformable body 70. As in the second embodiment, herein the bending strength of the substrates 81, 82 is preferably smaller than the bending strength between the first base material 11 of the first electrode 10 and the second base material 21 of the second electrode 20.

In this photoelectric conversion element 3, the structure 50 is enclosed by the laminated bag 83, such that the deformable body 70 is disposed between the structure 50 and the laminated bag 83. Therefore, the deformable body 70 deforms when the photoelectric conversion element 3 is subjected to bending strain from outside. As a result, the bending strain is absorbed by the deformable body 70, so that the structure 50 is less likely to deform, if the bending strain is weak. The deformable body 70 deforms in case of a strong bending strain, whereby the bending strain acting on the structure 50 can be sufficiently reduced compared to the bending strain that acts on the laminated bag 83. Point stress, such as a blow, is also relieved by the laminated bag 83 and the deformable body 70. This allays the concern of damage to the structure 50. Accordingly, the photoelectric conversion element 3 allows enhancing endurance against bending strain and impacts, as the photoelectric conversion element 2 of the second embodiment.

The substrates 81, 82 break or are damaged before malfunction of the structure 50 occurs, i.e. before functional impairment of structure 50 appears, even when the photoelectric conversion element 3 is acted upon by a bending strain strong enough to result in breakage or damage. Breakage of the structure 50 can be prevented more easily thereby.

Examples

Example 1

(Manufacture of the first electrode and the second electrode)

Two sheets of an ITO transparent conductive PEN film (OTEC, by Oji Tobi), 10 cm square and 0.1 mm thick, were cleaned. Then Pt, as a catalyst, was sputtered to several tens of nm on one of the transparent conductive PEN films, and a small electrolytic solution infusion hole was provided in the corner, to manufacture thereby a second electrode.

The other ITO transparent conductive PEN film was masked, using mending tape, so as to surround a size about 8 cm square (position shifted by 10 mm from the center), and a titanium oxide paste for plastic films (PECC-01, by PECCEL) was applied manually. The masking was then stripped off, and the whole was dried at 150°C, to manufacture a porous titanium oxide film having a thickness of about 5 $\mu$m. Thereafter, the ITO transparent conductive PEN film having the porous titanium oxide film formed thereon was immersed overnight in dehydrated ethanol in which a dye (Ruthenium 535, by Solaronix) had been dissolved to 0.3 mM and was made to support the dye. Thus, a first electrode was manufactured.

(Structure assembly)

The peripheries of the first electrode and second electrode thus obtained were bonded over about 5 mm, offset from each other by 3 mm to allow for electrode leadout, using a hot-melt resin (Himilan, by Du Pont-Mitsui Polychemicals), to yield a bag-like shape. Thereafter, an electrolytic solution was infused through the electrolytic solution infusion hole provided in the second base material of the second electrode, followed by sealing using a UV curable resin (by Three-Bond). A flexible printed boards were bonded to the electrodes, using a conductive adhesive, to manufacture thereby the structure.

(Sealing of the structure in the case)

As the substrate of the case on the side of the first electrode, there was prepared one hard polycarbonate (hereafter, referred to as PC) substrate, 12 cm square and 3 mm thick, and as the substrate of the case on the side of the second electrode, there was prepared one amorphous PET (hereafter, referred to as a-PET) substrate, 12 cm square and 2 mm thick. An end mill was used to form, in the a-PET substrate of the case, 100 cylindrical recesses having each a diameter of about 1 mm, over the entire inner face of the substrate, down to about half the thickness of the substrate, at a pitch between recesses of 1 cm. A silica film, as a gas barrier layer, was formed then on both substrates. A through-hole through which a flexible printed board was taken out, and an infusion hole of the deformable body, were provided in the a-PET substrate.

It was confirmed that, when the a-PET substrate was bent with a radius of curvature of 150 mm or less, it begins to break from the recesses formed using the end mill.

Next, the structure manufactured as described above was lightly clamped between the PC substrate and the a-PET substrate, and the flexible printed board was taken out through the through-hole, after which the peripheries were fixed, over about 5 mm, using a two-component epoxy adhesive. The through-hole for taking out the flexible printed board was sealed likewise, but in a state where some leeway was left for the flexible printed board, i.e. a state in which the flexible printed board is bent.

Next, silicone oil thoroughly dried in a glovebox was prepared as the deformable body, and was infused via the infusion hole of the deformable body provided in the a-PET substrate, while under appropriate formation of vacuum to prevent air bubbles from entering the deformable body. The infusion hole was sealed using a UV curable resin (ThreeBond). A photoelectric conversion element was thus obtained.

Example 2

A photoelectric conversion element was obtained in the same way as in Example 1, but herein a drying agent in the form of a molecular sieve, dried in a glovebox, was pressed into recesses that had been formed in the a-PET substrate of the case using an end mill. The drying agent was then wetted with silicone oil.

Example 3

A photoelectric conversion element was obtained in the same way as in Example 2, except that, to manufacture the first electrode and the second electrode, conductive substrates obtained by forming, by SPD, an FTO transparent conductive film on a thin low-alkali glass 0.02 mm thick were used and then fired at 450°C. Onto one conductive substrate a high-temperature sintering-type paste for glass (Ti-nanoxide T, by Solaronix) was printed and then fired at 450°C, to form a porous titanium oxide layer.

Example 4

A structure was manufactured in the same way as in Example 3, but using a 0.04 mm-thick titanium foil as the second substrate. A case was manufactured in the same way as in Example 1, but using herein an aluminum deposition type gas barrier sheet as the substrate of the case on the side of the second electrode. Thereafter, a photoelectric conversion element was obtained by using the above structure and the case and sealing the structure in the case in the same way as in Example 1.

Example 5

A photoelectric conversion element was manufactured in the same way as in Example 4, but herein a drying agent in the form of a molecular sieve was disposed in recesses of the case, as in Example 2.

Table 1 shows the types of substrate used for manufacturing the first electrode and the second electrode, the type of paste used for manufacturing the porous oxide semiconductor layer, the types of substrate used for manufacturing the case, and whether a drying agent is present or not, in Examples 1 to 5.

Table 1

| | Example 1 | Example 2 | Example 3 |
|---|---|---|---|
| First electrode | Conductive PEN film | Conductive PEN film | Film having an FTO transparent conductive film formed on low-alkali glass |
| Second electrode | Conductive PEN film | Conductive PEN film | Film having an FTO transparent conductive film formed on low-alkali glass |
| Porous semiconductor layer | Low-temperature sintering type for films | Low-temperature sintering type for films | High-temperature sintering type for glass |
| First electrode-side case substrate | PC with gas barrier film | PC with gas barrier film | PC with gas barrier film |
| Second electrode-side case substrate | a-PET with gas barrier film | a-PET with gas barrier film | a-PET with gas barrier film |
| Drying agent | None | Molecular sieve | Molecular sieve |

| | Example 4 | Example 5 |
|---|---|---|
| First electrode | Film having an FTO transparent conductive film formed on low-alkali glass | Film having an FTO transparent conductive film formed on low-alkali glass |
| Second electrode | Titanium foil (t0.04 mm) | Titanium foil (t0.04 mm) |
| Porous semiconductor layer | High-temperature sintering type for glass | High-temperature sintering type for glass |
| First electrode-side case substrate | PC with gas barrier film | PC with gas barrier film |
| Second electrode-side case substrate | Aluminum deposition type gas barrier sheet | Aluminum deposition type gas barrier sheet |
| Drying agent | None | Molecular sieve |

Comparative example 1

The structure manufactured in Example 1 was manufactured as the photoelectric conversion element of Comparative example 1.

Comparative example 2

The structure manufactured in Example 4 was manufactured as the photoelectric conversion element of Comparative example 2.

Table 2 shows the types of substrate used for manufacturing the first electrode and the second electrode, the type of paste used for manufacturing the porous oxide semiconductor layer, the types of substrate used for manufacturing the case, and whether a drying agent is present or not, in Comparative examples 1 to 2.

Table 2

|  | Comparative example 1 | Comparative example 2 |
|---|---|---|
| First electrode | Conductive PEN film | Film having an FTO transparent conductive film formed on low-alkali glass |
| Second electrode | Conductive PEN film | Titanium foil (t0.04 mm) |
| Porous semiconductor layer | Low-temperature sintering type for films | High-temperature sintering type for glass |
| First electrode-side case substrate | None | None |
| Second electrode-side case substrate | None | None |
| Drying agent | None | None |

The characteristics of the photoelectric conversion elements of Examples 1 to 5 and Comparative examples 1 to 2 obtained as described above were evaluated on the basis of a hail resistance test and a wind pressure resistance test. The results are shown in Table 1.

The hail resistance test and the wind pressure resistance test were carried out in conformity with JIS-C8938. The hail test assesses impact resistance. In the hail test an iron ball weighing 227 g was dropped onto the center of the photoelectric conversion element from a height of 1 m, and there was evaluated whether damage such as breakage or the like occurred as a result (simple test). In Table 3, A denoted absence of damage and B denoted occurrence of damage. The wind pressure resistance test assesses bending resistance. In the wind pressure resistance, the entire surface of the photoelectric conversion element was subjected to a static load of 1422 N/m$^2$ and there was evaluated whether damage such as breakage or the like occurred (simple test). In Table 3, A denoted absence of damage, and B denoted occurrence of damage.

Table 3

|  | Hail resistance test (impact resistance) | Wind pressure resistance test (bending resistance) |
|---|---|---|
| Example 1 | A | A |
| Example 2 | A | A |
| Example 3 | A | A |
| Example 4 | A | A |
| Example 5 | A | A |
| Comparative example 1 | B | A |
| Comparative example 2 | B | B |

According to the results of the hail resistance test and the wind pressure resistance test shown in Table 3, damage such as breakage or the like was not observed in any of the photoelectric conversion elements of Examples 1 to 5. In the photoelectric conversion element of Comparative example 1 damage was observed in the hail resistance test. In the photoelectric conversion element of Comparative example 2 damage occurred in both tests. It was found that the photoelectric conversion elements of Examples 1 to 5 had more excellent durability against hail and wind pressure than the photoelectric conversion elements of Comparative examples 1 and 2. Accordingly, it was confirmed that the photoelectric conversion element of the present invention is excellent in bending resistance and impact resistance.

Bending tests were further performed on the photoelectric conversion elements of Examples 1 to 5 and Comparative examples 1 and 2. The results are shown in Table 4. In the bending test, the breakage state of the substrate when the photoelectric conversion elements were bent and the user feels that the substrate had broken and electrolytic solution leakage.

Table 4

| | Bending test |
|---|---|
| Example 1 | Breakage of substrate on first electrode side of case |
| Example 2 | Breakage of substrate on first electrode side of case |
| Example 3 | Breakage of substrate on first electrode side of case |
| Example 4 | Simultaneous breakage of first electrode and of substrate on first electrode side of case |
| Example 5 | Breakage of substrate on first electrode side of case |

From the results shown in Table 4, in the bending test, the structure did not break before the case did, for the photoelectric conversion elements of Examples 1 to 5.

It was found that in Examples 1 to 5 the structure did not break before the case did, by setting the bending strength of the case substrate on the side of the second electrode to be smaller than that of the base material on the side of the second electrode. Therefore, it is believed that the photoelectric conversion elements of Examples 1 to 5 allow clearly noticing damage due to excessive bending by the user, and allow thus preventing improper handling of the photoelectric conversion elements.

The rate of decrease of photoelectric conversion efficiency upon storage for 500 hours under high humidity was investigated next. Storage was performed under the conditions of at 50°C and 85% RH for 500 hours. The rate of decrease of the photoelectric conversion efficiency was calculated in accordance with the formula below:

$$\text{Rate of decrease } (\%) = 100 \times (\eta_0 - \eta)/\eta_0,$$

wherein $\eta_0$ denotes the initial photoelectric conversion efficiency of the photoelectric conversion element, and $\eta$ denotes the photoelectric conversion efficiency after 500 hours of storage. The results are shown in Table 5.

Table 5

| | Rate of decrease of photoelectric conversion efficiency upon 500-hour storage |
|---|---|
| Example 1 | 42% |
| Example 2 | 14% |
| Example 3 | 6% |
| Example 4 | 18% |
| Example 5 | 5% |
| Comparative example 1 | 67% |
| Comparative example 2 | 21% |

As regards the rate of decrease of photoelectric conversion efficiency upon 500-hour storage under high humidity, it was confirmed that highly reliable photoelectric conversion elements exhibiting long-term durability against high humidity are realized by providing a drying agent.

INDUSTRIAL APPLICABILITY

The present invention can be used in wet solar cells (solar cells that use an electrolytic solution), typified by the dye-sensitized solar cells.

EXPLANATION OF REFERENCE NUMERALS

1, 2...photoelectric conversion element, 7...drying agent, 10...first electrode, 11...first base material, 12...transparent conductive film, 13... porous oxide semiconductor layer, 20...second electrode, 21...second base material, 22...conductive film, 22...catalyst, 30... electrolyte, 40... sealing member, 41...first sealing member, 42...second sealing member, 43...third sealing member, 44...fourth sealing member, 50... structure, 60, 80...cause, 61, 62, 81, 82 case-forming substrate, 62a... surface in contact with deformable body, 62b...recess, 62c...through-hole, 63...bonding layer, 70... deformable body, 83...laminated bag, $\alpha$.... wiring

**Claims**

1.  A photoelectric conversion element (1), comprising:

    a structure (50);
    a case (60) into which the structure (50) is built; and
    a deformable body (70) disposed between the structure (50) and the case (60),
    wherein the structure (50) includes:

        a conductive first electrode (10) provided with a porous oxide semiconductor layer (13) on which a sensitizing dye is supported;
        a second electrode (20) disposed opposing the first electrode (10); and
        an electrolyte (30) arranged at least at a portion between the first electrode (10) and the second electrode (20),

    a first substrate (61), provided within the case (60) and opposing the first electrode (10); and
    a second substrate (62) provided within the case and opposing the second electrode (20),
    wherein the first electrode (10) has a first base material (11), and the second electrode (20) has a second base material (21),
    **characterized in that** the bending strength of at least one of the first substrate (61) and the second substrate (62) is smaller than the bending strength of at least one of the first base material (11) and the second base material (21) included in the structure (50).

2.  The photoelectric conversion element (1) according to claim 1, wherein the deformable body (70) is a liquid.

3.  The photoelectric conversion element (1) according to claim 1, wherein the deformable body (70) is a gel-like body.

4.  The photoelectric conversion element (1) according to claim 1, wherein the deformable body (70) is made out of clay.

5.  The photoelectric conversion element (1) according to any one of claims 2 to 4, wherein the structure (50) is disposed in a state of having freedom within the deformable body (70).

6.  The photoelectric conversion element (1) according to any one of claims 2 to 4, wherein viscosity of the deformable body (70) at 25°C ranges from 0.02 Pa·s to 200 Pa·s.

7.  The photoelectric conversion element (1) according to any one of claims 1 to 6, wherein the deformable body (70) is disposed over an entire region between the case (60) and the structure (50).

8.  The photoelectric conversion element (1) according to any one of claims 1 to 6, wherein wiring that electrically connects the structure (50) and an exterior is disposed so as to bend within the case (60).

9.  The photoelectric conversion element (1) according to any one of claims 1 to 8, wherein a drying agent is disposed between the structure (50) and an inner wall of the case (60).

**Patentansprüche**

1.  Photoelektrisches Umwandlungselement (1) mit:

einer Struktur (50);

einem Gehäuse (60), in das die Struktur (50) eingebaut ist; und

einem deformierbaren Körper (70), der zwischen der Struktur (50) und dem Gehäuse (60) angeordnet ist, wobei die Struktur (50) aufweist:

eine leitfähige erste Elektrode (10), die mit einer porösen Oxid-Halbleiterschicht (13) versehen ist, auf der ein Sensibilisierungsfarbstoff abgelagert ist;

eine zweite Elektrode (20), die der ersten Elektrode (10) entgegengesetzt angeordnet ist; und

einen Elektrolyt (30), der zumindest bei einem Abschnitt zwischen der ersten Elektrode (10) und der zweiten Elektrode (20) angeordnet ist;

ein erstes Substrat (61), das in dem Gehäuse (60) und der ersten Elektrode (10) gegenüberliegend vorgesehen ist; und

ein zweites Substrat (62), das in dem Gehäuse und der zweiten Elektrode (20) gegenüberliegend vorgesehen ist,

wobei die erste Elektrode (10) ein erstes Basismaterial (11) aufweist, und die zweite Elektrode (20) ein zweites Basismaterial (21) aufweist,

**dadurch gekennzeichnet dass**,

die Biegefestigkeit des ersten Substrats (61) und/oder des zweiten Substrats (62) kleiner ist als die Biegefestigkeit des ersten Basismaterials (11) und/oder des zweiten Basismaterials (21), die in der Struktur (50) aufgenommen sind.

2. Photoelektrisches Umwandlungselement (1) nach Anspruch 1, bei dem der deformierbare Körper (70) eine Flüssigkeit ist.

3. Photoelektrisches Umwandlungselement (1) nach Anspruch 1, bei dem der deformierbare Körper (70) ein gelartiger Körper ist.

4. Photoelektrisches Umwandlungselement (1) nach Anspruch 1, bei dem der deformierbare Körper (70) aus Ton ausgebildet ist.

5. Photoelektrisches Umwandlungselement (1) nach einem der Ansprüche 2 bis 4, bei dem die Struktur (50) in einem freien Zustand in dem deformierbaren Körper (70) angeordnet ist.

6. Photoelektrisches Umwandlungselement (1) nach einem der Ansprüche 2 bis 4, bei dem eine Viskosität des deformierbaren Körpers (70) bei 25°C in einem Bereich von 0.02 Pa·s bis 200 Pa·s liegt.

7. Photoelektrisches Umwandlungselement (1) nach einem der Ansprüche 1 bis 6, bei dem der deformierbare Körper (70) über einen gesamten Bereich zwischen dem Gehäuse (60) und der Struktur (50) angeordnet ist.

8. Photoelektrisches Umwandlungselement (1) nach einem der Ansprüche 1 bis 6, bei dem eine Verkabelung, welche die Struktur (50) und eine Außenseite elektrisch verbindet, so angeordnet ist, dass sie sich in dem Gehäuse (60) biegt.

9. Photoelektrisches Umwandlungselement (1) nach einem der Ansprüche 1 bis 8, bei dem zwischen der Struktur (50) und einer Innenwand des Gehäuses (60) ein Trockenmittel angeordnet ist.

**Revendications**

1. Élément de conversion photoélectrique (1), comprenant :

une structure (50) ;

un boîtier (60) dans lequel la structure (50) est construite ; et

un corps déformable (70) disposé entre la structure (50) et le boîtier (60),

dans lequel la structure (50) comporte :

une première électrode conductrice (10) dotée d'une couche semi-conductrice d'oxyde poreuse (13) sur laquelle est supporté un colorant sensibilisateur ;

une deuxième électrode (20) disposée à l'opposé de la première électrode (10) ; et

un electrolyte (30) agencé au moins au niveau d'une partie entre la première électrode (10) et la deuxième électrode (20),

un premier substrat (61), prévu à l'intérieur du boîtier (60) et se trouvant à l'opposé de la première électrode (10) ; et

un deuxième substrat (62) prévu à l'intérieur du boîtier et se trouvant à l'opposé de la deuxième électrode (20),

où la première électrode (10) présente un premier matériau de base (11), et la deuxième électrode (20) présente un deuxième matériau de base (21),

**caractérisé en ce que**

la résistance à la flexion d'au moins l'un parmi le premier substrat (61) et le deuxième substrat (62) est inférieure à la résistance à la flexion d'au moins l'un parmi le premier matériau de base (11) et le deuxième matériau de base (21) inclus dans la structure (50).

2. Élément de conversion photoélectrique (1) selon la revendication 1, dans lequel le corps déformable (70) est un liquide.

3. Élément de conversion photoélectrique (1) selon la revendication 1, dans lequel le corps déformable (70) est un corps de type gel.

4. Élément de conversion photoélectrique (1) selon la revendication 1, dans lequel le corps déformable (70) est réalisé en argile.

5. Élément de conversion photoélectrique (1) selon l'une quelconque des revendications 2 à 4, dans lequel la structure (50) est disposée dans un état de liberté à l'intérieur du corps déformable (70).

6. Élément de conversion photoélectrique (1) selon l'une quelconque des revendications 2 à 4, dans lequel la viscosité du corps déformable (70) à 25°C varie de 0,02 Pa·s à 200 Pa·s

7. Élément de conversion photoélectrique (1) selon l'une quelconque des revendications 1 à 6, dans lequel le corps déformable (70) est disposé sur une zone entière entre le boîtier (60) et la structure (50).

8. Élément de conversion photoélectrique (1) selon l'une quelconque des revendications 1 à 6, dans lequel un câblage qui relie électriquement la structure (50) et une partie extérieure est disposé de manière à se plier à l'intérieur du boîtier (60).

9. Élément de conversion photoélectrique (1) selon l'une quelconque des revendications 1 à 8, dans lequel un agent de séchage est disposé entre la structure (50) et une paroi intérieure du boîtier (60).

# FIG. 1

EP 2 287 960 B1

F I G. 2

22

F I G. 3

EP 2 287 960 B1

# FIG. 4

24

# F I G. 5

# F I G .  6

# F I G. 7

# F I G. 8

**EP 2 287 960 B1**

**REFERENCES CITED IN THE DESCRIPTION**

**Patent documents cited in the description**

- JP H11288745 B
- JP 2005251650 A
- JP 2005294001 A